# EUROPEAN PATENT APPLICATION

(11) **EP 4 811 238 A1**
(43) Date of publication of application: **23.09.2026**
(21) Application number: 26165022.0
(22) Date of filing: 16.03.2026
(51) Int. Cl.: G06Q 10/0635

(54) **SYSTEM FOR PERFORMING CLOUD MIGRATION ASSESSMENT**

(30) Priority: 17.03.2025 TW 114202639 U
(71) Applicant: Cathay Financial Holding Co., Ltd., Taipei City 106436 (TW)
(72) Inventor: YEN, Sheng-Hao, 106436 Taipei (TW); LEE, Chi, 106436 Taipei (TW); CHU, Shang-Li, 106436 Taipei (TW); CHEN, Li-Tung, 106436 Taipei (TW); CHUANG, Hsiang-Jen, 106436 Taipei (TW)
(74) Representative: DREISS Patentanwälte PartG mbB

(57) **Abstract**

A system (1) for performing cloud migration assessment includes a communication unit (11) for communicating with a user terminal device (2), a storage device (12) storing a pre-migration questionnaire (121), and a processor (13) that is connected to the communication unit (11) and the storage device (12), and that communicates with the user terminal device (2) via the communication unit (11). The processor (13) provides the user terminal device (2) with the pre-migration questionnaire (121) for a user of the user terminal device (2) to respond to the pre-migration questionnaire (121) with response data (122), generates a pre-migration assessment report (123) based on the response data (122), generates an evaluation table (124) based on the response data (122) and the pre-migration assessment report (123), and generates a data-visualization dashboard (125) based on the response data (122), the pre-migration assessment report (123) and the evaluation table (124).

## Description

The disclosure relates to a system for performing cloud migration assessment.

With the need for digitalization in enterprises, migrating data, applications, and information technology (IT) resources to a cloud platform (commonly known as cloud migration) to reduce costs and optimize infrastructure has become an inevitable trend. Furthermore, prior to undertaking cloud migration (commonly known as pre-cloud migration), enterprises have to conduct pre-migration assessments (including resource inventory, cost analysis, and risk evaluation) for subjects (e.g., applications, IT resources, and so on) to be migrated to the cloud platform. However, conventional approaches for conducting pre-migration assessments have issues described as follows.

First, conventional approaches are usually implemented without using standardized frameworks and quantitative metrics. Due to lack of comparable quantitative data, it is difficult for enterprises to objectively evaluate migration priorities of different systems and to select suitable migration strategies.

Second, conventional approaches rely excessively on manual processes. As a result, conventional approaches not only consume significant manpower and time, but also fail to update results of pre-migration assessments in real time according to rapid changes of enterprises.

Third, it is difficult for conventional approaches to provide useful information to facilitate decision making across different business affairs. Thus, managers are often unable to, with a macro perspective, allocate resources or adjust strategies in time.

Therefore, an object of the disclosure is to provide a system for performing cloud migration assessment that can alleviate at least one of the drawbacks of the prior art.

According to the disclosure, the system includes a communication unit, a storage device and a processor.

The communication unit is configured to establish a communication channel for communicating with a user terminal device.

The storage device stores a pre-migration questionnaire related to a to-be-assessed subject to be migrated to a cloud platform.

The processor is electrically connected to the communication unit and the storage device, and communicates with the user terminal device via the communication unit.

The processor implements a questionnaire module to obtain the pre-migration questionnaire from the storage device, to provide the user terminal device with the pre-migration questionnaire thus obtained for a user of the user terminal device to respond to the pre-migration questionnaire with response data related to system information of the to-be-accessed subject, and to store the response data in the storage device.

The processor further implements a reporting module to generate a pre-migration assessment report based on the response data, and to store the pre-migration assessment report in the storage device. The pre-migration assessment report contains a migration order for migrating the to-be-assessed subject to the cloud platform, a migration strategy for migrating the to-be-assessed subject to the cloud platform, and for each of multiple evaluation metrics associated with the to-be-assessed subject, a rated level at which the to-be-assessed subject is rated in terms of the evaluation metric.

The processor further implements a listing module to obtain the response data and the pre-migration assessment report from the storage device, to generate an evaluation table based on the response data and the pre-migration assessment report thus obtained, and to store the evaluation table in the storage device. The evaluation table presents, for the to-be-assessed subject, the migration strategy, the migration order, and the rated level for each of the evaluation metrics in one line.

The processor further implements a dashboard module to obtain the response data, the pre-migration assessment report and the evaluation table from the storage device, and to generate a data-visualization dashboard based on the response data, the pre-migration assessment report and the evaluation table thus obtained. The data-visualization dashboard contains a bubble chart presenting the migration order for the to-be-assessed subject, a first bar chart presenting a number of subjects to be migrated with the migration strategy, a second bar chart presenting a number of subjects to be migrated with the migration order, and a pie chart presenting numerical proportion for the to-be-assessed subject.

Other features and advantages of the disclosure will become apparent in the following detailed description of the embodiment(s) with reference to the accompanying drawings. It is noted that various features may not be drawn to scale.
Figure 1 is a block diagram illustrating a system for performing cloud migration assessment according to an embodiment of the disclosure.
Figure 2 is a schematic diagram illustrating an example of a pre-migration questionnaire according to an embodiment of the disclosure.
Figure 3 is a schematic diagram illustrating an example of a screenshot of a pre-migration assessment report according to an embodiment of the disclosure.
Figure 4 is a schematic diagram illustrating an example of a screenshot of an advisory opinion according to an embodiment of the disclosure.
Figure 5 is a schematic diagram illustrating an example of a screenshot of an evaluation table according to an embodiment of the disclosure.
Figure 6 is a schematic diagram illustrating an example of a screenshot of a data-visualization dashboard according to an embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

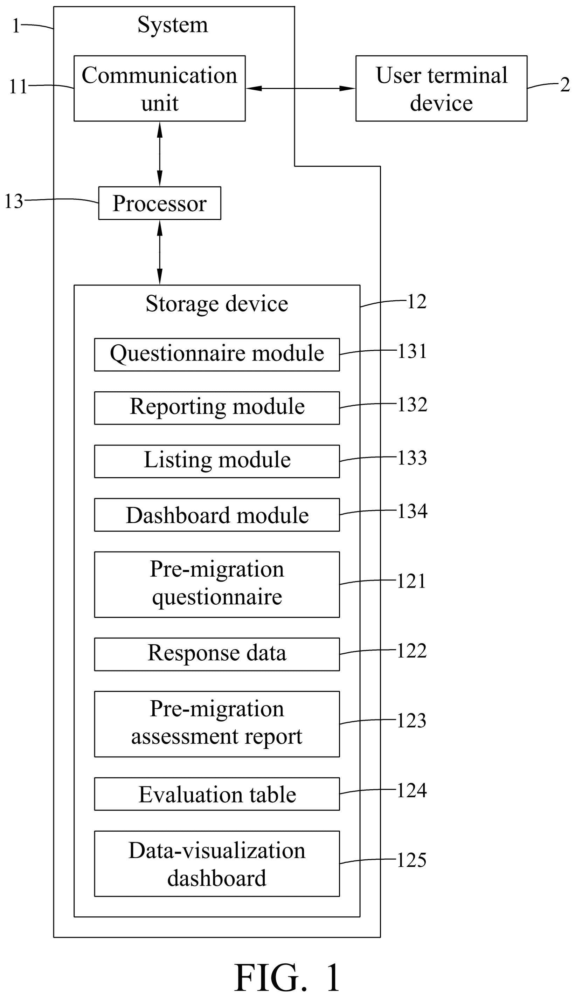

Referring to Figure 1, an embodiment of a system 1 for performing cloud migration assessment according to the disclosure is illustrated. The system 1 is a computer device, and may be implemented to be a desktop computer, a laptop computer, a notebook computer, a tablet computer, a computing server or a data server, but implementation thereof is not limited to what are disclosed herein and may vary in other embodiments. The system 1 is capable of communicating with a user terminal device 2. The user terminal device 2 may be implemented by a desktop computer, a laptop computer, a notebook computer, a tablet computer, a smartphone, and so on, but implementations of the user terminal device 2 are not limited to the disclosure herein and may vary in other embodiments.

The system 1 includes a communication unit 11, a storage device 12, and a processor 13 that is electrically connected to the communication unit 11 and the storage device 12.

The communication unit 11 may be implemented to be a network interface controller or a wireless transceiver that supports wireless communication standards, such as Bluetooth^{®} technology standards, Wi-Fi technology standards and/or cellular network technology standards, but is not limited thereto. The communication unit 11 is configured to establish a communication channel in a communication network (which may be an intranet, a local area network, LAN, or the Internet, and may be provided by a telecommunications service provider) for communicating with the user terminal device 2. The processor 13 communicates with the user terminal device 2 via the communication unit 11.

The storage device 12 may be implemented by random access memory (RAM), double data rate synchronous dynamic random access memory (DDR SDRAM), read-only memory (ROM), programmable ROM (PROM), flash memory, a hard disk drive (HDD), a solid state disk (SSD), electrically-erasable programmable read-only memory (EEPROM) or any other volatile/non-volatile memory devices, but is not limited thereto. The storage device 12 stores a pre-migration questionnaire 121 related to a to-be-assessed subject to be migrated to a cloud platform. The to-be-assessed subject may be a software program, an information technology (IT) resource, a piece of data, and so on, but is not limited thereto. The storage device 12 further stores a software program that contains a questionnaire module 131, a reporting module 132, a listing module 133 and a dashboard module 134, and that is readable and executable by the processor 13.

The processor 13 may be implemented by a central processing unit (CPU), a microprocessor, a micro control unit (MCU), a system on a chip (SoC), or any circuit configurable/programmable in a software manner and/or hardware manner to implement functionalities discussed in this disclosure.

First, a user of the user terminal device 2 accesses a website published by the system 1 and logs in to the website, and the system 1 provides a user interface (not shown) to the user terminal device 2 to enable the user terminal device 2 to display the user interface on a screen of the user terminal device 2. The user interface includes a plurality of subject options that correspond respectively to a plurality of to-be-assessed subjects. When the user selects one of the subject options (hereinafter also referred to as the selected subject option), the user terminal device 2 sends to the processor 13 of the system 1 a pre-migration assessment command that is related to one of the to-be-assessed subjects to which the selected subject option corresponds. In other embodiments, the user interface includes an input field, and when the user inputs a name of a new to-be-assessed subject, the user terminal device 2 sends to the processor 13 of the system 1 a pre-migration assessment command that is related to the new to-be-assessed subject.

In response to receipt of the pre-migration assessment command, the processor 13 of the system 1 implements the questionnaire module 131 according to the pre-migration assessment command. Specifically, the processor 13 obtains from the storage device 12 the pre-migration questionnaire 121 related to the to-be-assessed subject, provides the user terminal device 2 with the pre-migration questionnaire 121 thus obtained for the user of the user terminal device 2 to respond to the pre-migration questionnaire 121 with response data 122 related to system information of the to-be-accessed subject, and stores the response data 122 in the storage device 12.

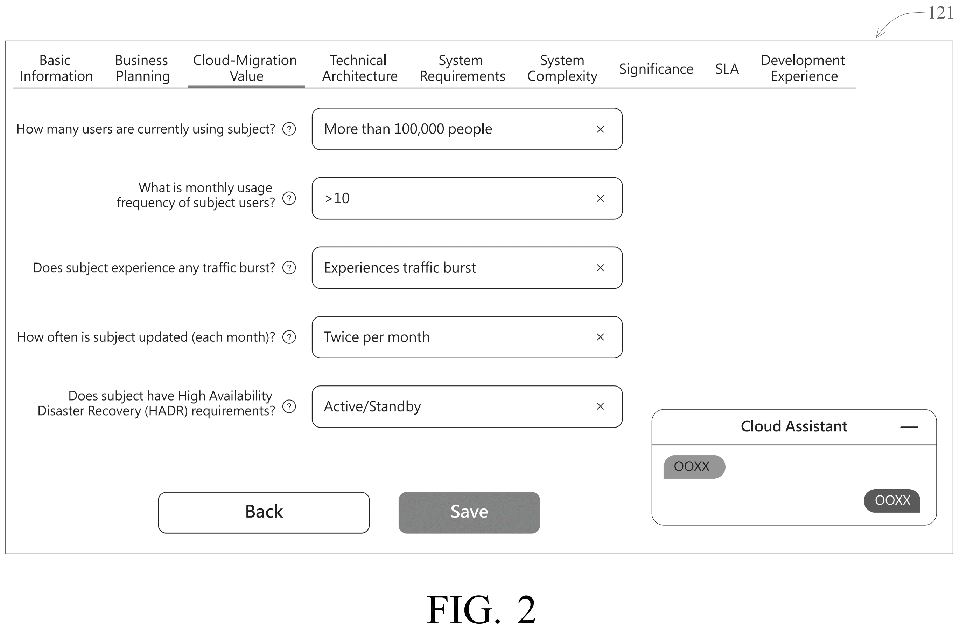

Referring to Figure 2, an example of a screen of the pre-migration questionnaire 121 is illustrated. The pre-migration questionnaire 121 is a structured questionnaire. The pre-migration questionnaire 121 includes a plurality of sections that are related respectively to aspects of basic information, business planning, cloud-migration value, technical architecture, system requirements, system complexity, significance, service level agreement (SLA), and development experience as shown in Figure 2. Each of the sections includes a plurality of specific questions. Each of the specific questions is designated with a predefined weight according to significance of the specific question, and the specific questions correspond to a plurality of answer options that are designated respectively with predefined scores. For each of the sections, a sum of the predefined scores is calculated as a sub-total score of the section. Ratios of the sub-total scores respectively of the sections and a total score of the sub-total scores can be set by using predetermined parameters for the pre-migration questionnaire 121. Besides multiple-choice questions, which provide a basis of accurate quantification, the specific questions further include some essay questions. In this way, standardization and completeness of data collection may be ensured.

It is worthy of note that the pre-migration questionnaire 121 is designed for analyzing the to-be-assessed subject in terms of three evaluation metrics associated with the to-be-assessed subject. The evaluation metrics include a business impact metric for evaluating an impact of migrating the to-be-assessed subject to the cloud platform on business, a technical cost metric for evaluating a cost of migrating the to-be-assessed subject to the cloud platform, and a risk level metric for evaluating a risk of migrating the to-be-assessed subject to the cloud platform. The business impact metric is evaluated by using the specific questions in the two sections related to the aspects of business planning and cloud-migration value; the technical cost metric is evaluated by using the specific questions in the three sections related to the aspects of technical architecture, system requirements, and system complexity; and the risk level metric is evaluated by using the specific questions in the two sections related to the aspects of significance and SLA.

In a case where a respondent has questions about any one of the specific questions or the answer options in the pre-migration questionnaire 121, he/she may be able to click on a question mark icon next to the one of the specific questions or the answer options. In response to a click on the question mark icon, the processor 13 implementing the questionnaire module 131 will then display a "Cloud Assistant" chatbot on a right side of the screen of the pre-migration questionnaire 121. The "Cloud Assistant" chatbot would help the respondent quickly comprehend the one of the specific questions or the answer options, thereby improving efficiency and accuracy of questionnaire completion.

When all of the specific questions in the pre-migration questionnaire 121 are completed and answers are submitted by the respondent, the processor 13 implementing the questionnaire module 131 receives the answers, organizes the answers as the response data 122, and stores the response data 122 in the storage device 12.

Subsequently, the processor 13 further implements the reporting module 132. Specifically, the processor 13 generates a pre-migration assessment report 123 based on the response data 122 stored in the storage device 12, and stores the pre-migration assessment report 123 in the storage device 12. The pre-migration assessment report 123 contains a migration order for migrating the to-be-assessed subject to the cloud platform, a migration strategy for migrating the to-be-assessed subject to the cloud platform, and for each of the evaluation metrics, a rated level at which the to-be-assessed subject is rated in terms of the evaluation metric. The rated level is one of a high level, a medium-high level, a medium-low level and a low level. The processor 13 implementing the reporting module 132 calculates, for each of the evaluation metrics, an evaluation score based on the response data 122, and assigns one of the high level, the medium-high level, the medium-low level and the low level as the rated level for the evaluation metric of the to-be-assessed subject based on the evaluation score thus calculated. The processor 13 determines the migration order for the to-be-assessed subject by calculating a migration score, normalizing the migration score based on a comparison between the migration score and a standard score to obtain a normalized score, and comparing the normalized score with three preset thresholds (e.g., 75%, 50% and 25%) and determining the migration order for the to-be-assessed subject as one of a first wave (hereinafter also referred to as "Wave1" or "WAVE1"), a second wave (hereinafter also referred to as "Wave2" or "WAVE2"), a third wave (hereinafter also referred to as "Wave3" or "WAVE3") and a fourth wave (hereinafter also referred to as "Wave4" or "WAVE4") based on a result of comparison between the normalized score and the preset thresholds. Particular, the migration score mentioned above is calculated according to a formula: the evaluation score for the business impact metric / (the evaluation score for the technical cost metric × the evaluation score for the risk level metric). In this way, objective and quantifiable recommendations related to migration planning may be obtained. The processor 13 implementing the reporting module 132 uses a part of the response data 122 that is related to a technology architecture of the to-be-assessed subject as an input to a decision tree model, and enables the decision tree model to select one of six predefined migration strategies as the migration strategy for the to-be-assessed subject. In this embodiment, the six predefined migration strategies include strategies of "Rehost," "Replatform," "Refactor," "Rewrite," "Replace" and "Retain." Thus, an optimized migration strategy for any to-be-assessed subject may be obtained. For the rated level of the business impact metric, the higher the better. For the rated level of the technical cost metric, the lower the better. For the rated level of the risk level metric, the lower the better. Thus, decision-makers may understand a relative position of the to-be-assessed subject within the overall environment. It is worthy of note that system administrators may adjust the aforementioned parameters (such as weights or thresholds) according to needs of enterprises, so as to revise the migration order and the migration strategy. Consequently, flexibility and preciseness in decision-making processes may be realized.

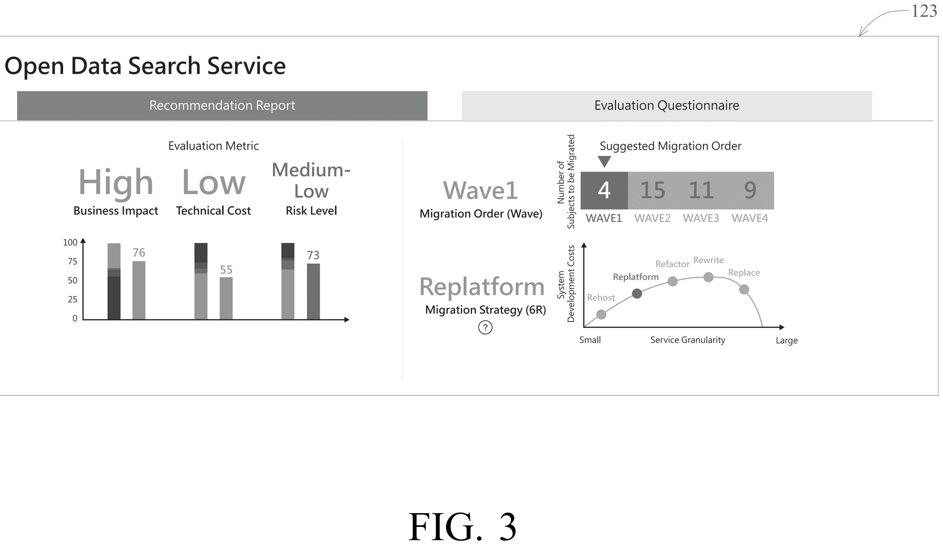

Referring to Figure 3, an example of a screen of the pre-migration assessment report 123 is illustrated, wherein the to-be-assessed subject is a software program, "Open Data Search Service". The processor 13 implementing the reporting module 132 calculates, for each of the business impact metric, the technical cost metric and the risk level metric, an evaluation score based on the response data 122, and assigns one of the high level, the medium-high level, the medium-low level and the low level as the rated level for said each of the business impact metric, the technical cost metric and the risk level metric based on the evaluation score thus calculated. The pre-migration assessment report 123 shows that the to-be-assessed subject (i.e., the software program, "Open Data Search Service") is rated at the high level in terms of the business impact metric, is rated at the low level in terms of the technical cost metric, and is rated at the medium-low level in terms of the risk level metric. Moreover, the pre-migration assessment report 123 further shows that the migration order for the to-be-assessed subject is the first wave (i.e., "Wave1" or "WAVE1" as shown in Figure 3), and the migration strategy for the to-be-assessed subject is the strategy of "Replatform."

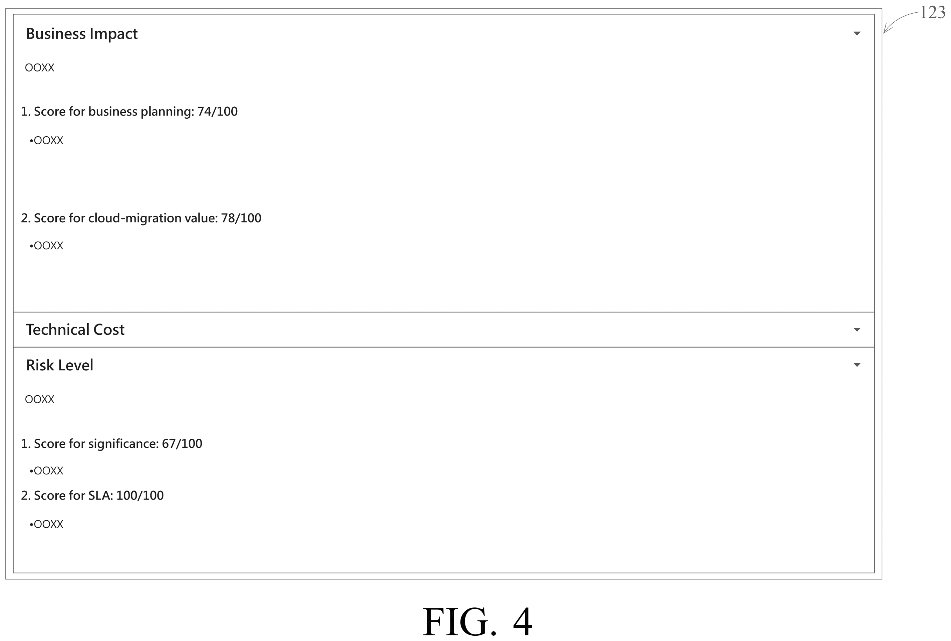

It is worthy of note that when a tag of "Recommendation report" shown in Figure 3 is selected, an advisory opinion as shown in Figure 4 is presented. The advisory opinion contains, for each of the evaluation metrics (i.e., the business impact metric, the technical cost metric and the risk level metric), detailed analysis and explanations of the rated level of the evaluation metric, suggestions with regard to the migration strategy, potential risks and countermeasures. In addition, key points and practical goals will be emphasized, ensuring completeness and specificity of the pre-migration assessment report 123. It is worth noting that the content of the advisory opinion is manually revisable, such as supplementing new content or deleting old content.

Thereafter, the processor 13 further implements the listing module 133. Specifically, the processor 13 obtains the response data 122 and the pre-migration assessment report 123 from the storage device 12, generates an evaluation table 124 based on the response data 122 and the pre-migration assessment report 123 thus obtained, and stores the evaluation table 124 in the storage device 12. The evaluation table 124 presents, for the to-be-assessed subject, the migration strategy, the migration order, and the rated level for each of the evaluation metrics in one line. It should be noted that in one embodiment where there are multiple to-be-assessed subjects, the processor 13 obtains, for each of the to-be-assessed subjects, the response data 122 and the pre-migration assessment report 123 from the storage device 12, and then generates the evaluation table 124 based on the response data 122 and the pre-migration assessment report 123 of each of the to-be-assessed subjects.

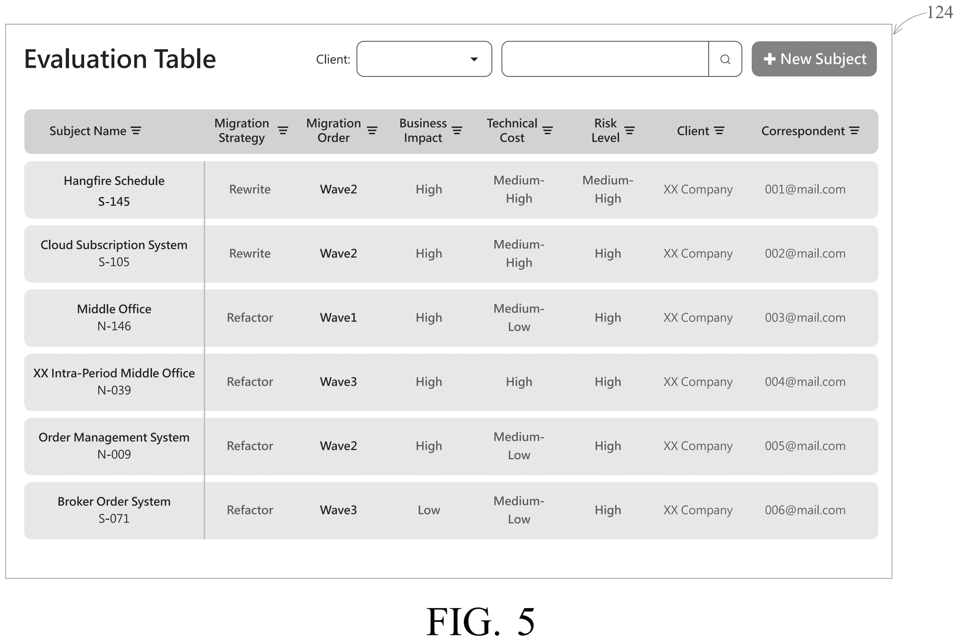

Referring to Figure 5, an example of a screenshot of the evaluation table 124 is illustrated, where there are multiple to-be-assessed subjects, i.e., "Hangfire Schedule S-145," "Cloud Subscription System S-105," "Middle Office N-146," "XX Intra-period Middle Office N-039," "Order Management System N-009," "Broker Order System S-071," and so on. The evaluation table 124 presents, for each of the to-be-assessed subjects, the migration strategy, the migration order, a client using the to-be-assessed subject, a correspondent, and the rated level for each of the evaluation metrics in one row. It is worthy of note that the evaluation table 124 allows a user to divide the to-be-assessed subjects into groups based on important features (e.g., the migration strategies) of the to-be-assessed subjects, and to perform filtering, sorting and searching based on key attributes. At the same time, multi-condition composite querying is supported. In this way, users are able to quickly locate a system list that meets specific migration requirements through functions of filtering, sorting and searching. As a result, efficiency of team collaboration and accuracy of decision-making may be enhanced.

Eventually, the processor 13 further implements the dashboard module 134. Specifically, the processor 13 obtains the response data 122, the pre-migration assessment report 123 and the evaluation table 124 from the storage device 12, generates a data-visualization dashboard 125 based on the response data 122, the pre-migration assessment report 123 and the evaluation table 124 thus obtained, and stores the data-visualization dashboard 125 in the storage device 12.

The data-visualization dashboard 125 contains a bubble chart presenting the migration order for the to-be-assessed subject, a first bar chart presenting a number of subjects to be migrated with the migration strategy, a second bar chart presenting a number of subjects to be migrated with the migration order, a third bar chart presenting a number of subjects using a kind of SLA, and a pie chart presenting numerical proportion for the to-be-assessed subject. The bubble chart has a horizontal axis that represents the evaluation score for the technical cost metric, and a vertical axis that represents the evaluation score for the risk level metric. Moreover, the bubble chart has a bubble that represents the to-be-assessed subject, and the bubble has a size that represents the evaluation score for the business impact metric for the to-be-assessed subject and a color that represents the migration order for the to-be-assessed subject. In this way, a plan of cloud migration is presented in a multidimensional way, allowing managers and relevant teams to clearly see the big picture of the plan of cloud migration.

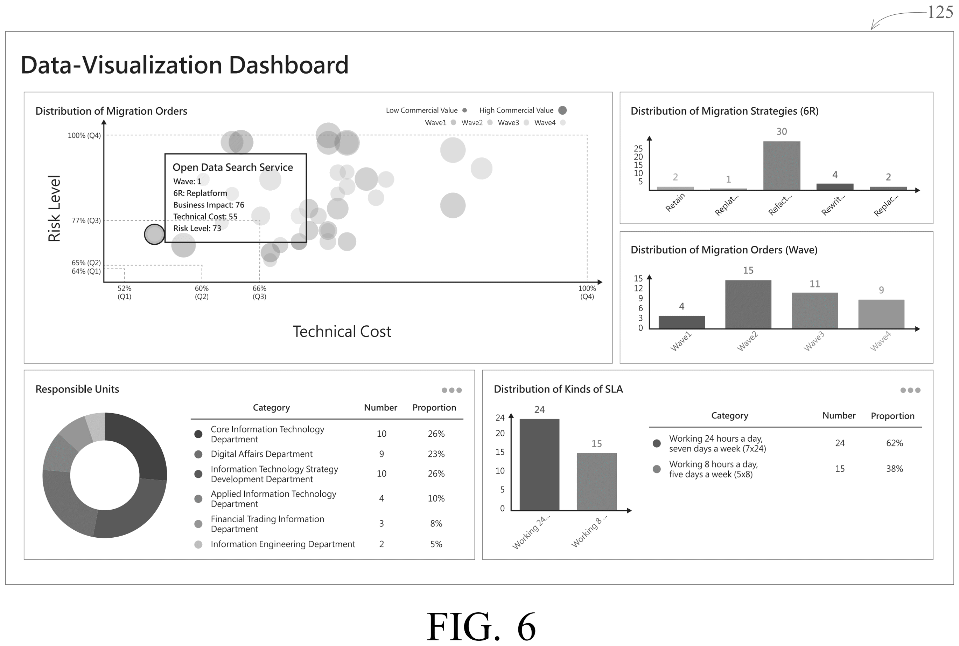

Referring to Figure 6, an example of a screenshot of the data-visualization dashboard 125 is illustrated, where there are multiple to-be-assessed subjects. The bubble chart in the upper-left corner of Figure 6 presents the migration orders for the to-be-assessed subjects. The first bar chart in the upper-right corner of Figure 6 presents, for each of the migration strategies (i.e., the strategies of "Rehost," "Replatform," "Refactor," "Rewrite," "Replace" and "Retain"), a number of subjects to be migrated with the migration strategy. The second bar chart in the middle-right of Figure 6 presents, for each of the migration orders (i.e., the first wave, the second wave, the third wave and the fourth wave), a number of subjects to be migrated with the migration order, The third bar chart in the lower-right corner of Figure 6 presents, for each of two kinds of SLA, a number of subjects using the kind of SLA, wherein the kinds of SLA includes a first SLA, "Working 24 hours a day, seven days a week (7x24)", and a second SLA, "Working 8 hours a day, five days a week (5x8)". The pie chart in the lower-left corner of Figure 6 presents, for each of multiple responsible units (i.e., a Core Information Technology Department, an Information Technology Strategy Development Department, a Digital Affairs Department, an Applied Information Technology Department, a Financial Trading Information Department and an Information Engineering Department), a number of subjects belonging to the responsible unit and a numerical proportion of the subjects belonging to the responsible unit. It is worthy of note that the pie chart is capable of further presenting a number and a numerical proportion of pain points in development, maintenance or operations.

The user of the user terminal device 2 is able to operate the user terminal device 2 to send a request to the system 1. In response to receipt of the request, the processor 13 of the system 1 reads the pre-migration assessment report 123, the evaluation table 124 and the data-visualization dashboard 125 from the storage device 12 of the system 1, and sends, via the communication unit 11 of the system 1, the pre-migration assessment report 123, the evaluation table 124 and the data-visualization dashboard 125 to the user terminal device 2. Thus, the user of the user terminal device 2 is able to read any one of the pre-migration assessment report 123, the evaluation table 124 and the data-visualization dashboard 125 on the user terminal device 2. Alternatively, the processor 13 of the system 1 directly sends, via the communication unit 11 of the system 1, the pre-migration assessment report 123, the evaluation table 124 and the data-visualization dashboard 125 to the user terminal device 2 as soon as the corresponding one of the pre-migration assessment report 123, the evaluation table 124 and the data-visualization dashboard 125 is generated. Thus, the user of the user terminal device 2 is able to read the corresponding one of the pre-migration assessment report 123, the evaluation table 124 and the data-visualization dashboard 125 on the user terminal device 2 as soon as possible.

To sum up, for the system 1 for performing cloud migration assessment according to the disclosure, the said processor 13 provides the user terminal device 2 with the pre-migration questionnaire 121 for a user of the user terminal device 2 to respond to the pre-migration questionnaire 121 with response data 122, generates the pre-migration assessment report 123 based on the response data 122, generates the evaluation table 124 based on the response data 122 and the pre-migration assessment report 123, and generates the data-visualization dashboard 125 based on the response data 122, the pre-migration assessment report 123 and the evaluation table 124. In this way, the system 1 may provide enterprises with accurate, rapid, decision-support-enabled recommendations related to migration strategies. The pre-migration questionnaire 121 is sophisticatedly designed, and is capable of collecting response data that encompasses the business impact metric for evaluating an impact of migrating the to-be-assessed subject to the cloud platform on business, the technical cost metric for evaluating a cost of migrating the to-be-assessed subject to the cloud platform, and the risk level metric for evaluating a risk of migrating the to-be-assessed subject to the cloud platform. Thus, in-depth analysis may be performed. The data-visualization dashboard 125 contains valuable and detailed reports, and allows users to interact with the data-visualization dashboard 125. Since the data-visualization dashboard 125 integrates essential information and provides insightful reports, the data-visualization dashboard 125 may help enterprises to effectively make decisions and plans for cloud migration, and may improve transparency and execution efficiency in processes of cloud migration.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A system (1) for performing cloud migration assessment, **characterized by**:
a communication unit (11) configured to establish a communication channel for communicating with a user terminal device (2);
a storage device (12) storing a pre-migration questionnaire (121) related to a to-be-assessed subject to be migrated to a cloud platform; and
a processor (13) that is electrically connected to said communication unit (11) and said storage device (12), and that communicates with the user terminal device (2) via said communication unit (11),
wherein said processor (13) implements a questionnaire module (131) to obtain the pre-migration questionnaire (121) from said storage device (12), to provide the user terminal device (2) with the pre-migration questionnaire (121) thus obtained for a user of the user terminal device (2) to respond to the pre-migration questionnaire (121) with response data (122) related to system information of the to-be-accessed subject, and to store the response data (122) in said storage device (12),
wherein said processor (13) further implements a reporting module (132) to generate a pre-migration assessment report (123) based on the response data (122), and to store the pre-migration assessment report (123) in said storage device (12), the pre-migration assessment report (123) containing a migration order for migrating the to-be-assessed subject to the cloud platform, a migration strategy for migrating the to-be-assessed subject to the cloud platform, and for each of multiple evaluation metrics associated with the to-be-assessed subject, a rated level at which the to-be-assessed subject is rated in terms of the evaluation metric,
wherein said processor (13) further implements a listing module (133) to obtain the response data (122) and the pre-migration assessment report (123) from said storage device (12), to generate an evaluation table (124) based on the response data (122) and the pre-migration assessment report (123) thus obtained, and to store the evaluation table (124) in said storage device (12), the evaluation table (124) presenting, for the to-be-assessed subject, the migration strategy, the migration order, and the rated level for each of the evaluation metrics in one line,
wherein said processor (13) further implements a dashboard module (134) to obtain the response data (122), the pre-migration assessment report (123) and the evaluation table (124) from said storage device (12), and to generate a data-visualization dashboard (125) based on the response data (122), the pre-migration assessment report (123) and the evaluation table (124) thus obtained, the data-visualization dashboard (125) containing a bubble chart presenting the migration order for the to-be-assessed subject, a first bar chart presenting a number of subjects to be migrated with the migration strategy, a second bar chart presenting a number of subjects to be migrated with the migration order, and a pie chart presenting numerical proportion for the to-be-assessed subject.

2. The system (1) as claimed in claim 1, **characterized in that**:
the evaluation metrics include a business impact metric for evaluating an impact of migrating the to-be-assessed subject to the cloud platform on business, a technical cost metric for evaluating a cost of migrating the to-be-assessed subject to the cloud platform, and a risk level metric for evaluating a risk of migrating the to-be-assessed subject to the cloud platform;
the rated level is one of a high level, a medium-high level, a medium-low level and a low level; and
said processor (13) implementing the reporting module (132) calculates, for each of the evaluation metrics, an evaluation score based on the response data (122), and assigns one of the high level, the medium-high level, the medium-low level and the low level as the rated level for the evaluation metric of the to-be-assessed subject based on the evaluation score thus calculated.

3. The system (1) as claimed in claim 2, **characterized in that** said processor (13) determines the migration order for the to-be-assessed subject by:
calculating a migration score according to a formula: the evaluation score for the business impact metric / (the evaluation score for the technical cost metric × the evaluation score for the risk level metric);
normalizing the migration score to obtain a normalized score; and
comparing the normalized score with three preset thresholds and determining the migration order for the to-be-assessed subject as one of a first wave, a second wave, a third wave and a fourth wave based on a result of comparison between the normalized score and the preset thresholds.

4. The system (1) as claimed in any one of claims 2 and 3, **characterized in that**:
the bubble chart has a horizontal axis that represents the evaluation score for the technical cost metric, and a vertical axis that represents the evaluation score for the risk level metric; and
the bubble chart has a bubble that represents the to-be-assessed subject, and the bubble has a size that represents the evaluation score for the business impact metric for the to-be-assessed subject and a color that represents the migration order for the to-be-assessed subject.

5. The system (1) as claimed in any one of claims 1 to 4, **characterized in that** said processor (13) implements the reporting module (132) to use a part of the response data (122) that is related to a technology architecture of the to-be-assessed subject as an input to a decision tree model, and to enable the decision tree model to select one of six predefined migration strategies as the migration strategy for the to-be-assessed subject.

6. The system (1) as claimed in any one of claims 1 to 5, **characterized in that**:
the system (1) is a computer device; and
the questionnaire module (131), the reporting module (132), the listing module (133) and the dashboard module (134) are contained in a software program that is stored in said storage device (12) and that is readable and executable by said processor (13).
